# Europäisches Patentamt
## European Patent Office
## Office européen des brevets

(11) Publication number: **0 049 311**
**B1**

(12)

# EUROPEAN PATENT SPECIFICATION

(45) Date of publication of patent specification: **27.03.85**

(21) Application number: **80303484.2**

(22) Date of filing: **02.10.80**

(51) Int. Cl.⁴: **G 01 N 29/04,** G 01 S 15/36, A 61 B 10/00

(54) Apparatus for locating interfaces in media.

(43) Date of publication of application:
**14.04.82 Bulletin 82/15**

(45) Publication of the grant of the patent:
**27.03.85 Bulletin 85/13**

(84) Designated Contracting States:
**CH DE FR LI NL SE**

(56) References cited:
DE-A-2 848 467
US-A-4 122 427
US-A-4 167 879
US-A-4 200 921

MEASUREMENT & CONTROL, Vol. 13, No. 1,
January 1980 London J.R. REDDING "A New
Genus of Transducer?" pages 27 to 30

(73) Proprietor: **Redding, Robert James
September House Cox Green Lane
Maidenhead, Berks. SL6 3EL (GB)**

(72) Inventor: **Redding, Robert James
September House Cox Green Lane
Maidenhead, Berks. SL6 3EL (GB)**

(74) Representative: **Abbott, Leonard Charles et al
GILL JENNINGS & EVERY 53-64 Chancery Lane
London WC2A 1HN (GB)**

Courier Press, Leamington Spa, England.

## Description

This invention relates to apparatus for detecting interfaces occurring in systems of solid and/or fluid media.

United States Patent No. 4 122 427 discloses a monitoring apparatus, in which the shift in phase of a reflected ultrasonic wave relative to the phase of a transmitted unmodulated wave provides an indication of changes in distance occurring due to motion of a human organ.

In my article "A New Genus of Transducer?" in Measurement & Control, Vol. 13, No. 1, January 1980, pages 27 to 30, I have described a distance-measuring equipment in which the ultrasonic wave transmitted through a medium by a transmitting transducer is frequency modulated. The ultrasonic energy reflected from an interface in the medium is received by a receiving transducer. The modulation frequency is adjusted to obtain a required relationship between the phase of the modulation of the transmitted wave and the phase of the modulation of the received reflection. The frequency is then a measure of the distance to the interface.

That method of measurement, in which a frequency-modulated ultrasonic carrier is used, is very advantageous over the conventional methods in which unmodulated ultrasonic energy is used. If an unmodulated ultrasonic wave is used, only a distance corresponding to no more than one wavelength of the ultrasonic wave can be measured before ambiguity arises. On the other hand, if a modulated wave is used, and the measurements are carried out on the basis of the modulation parameters, the frequency and amplitude of the carrier wave can be varied over a wide range without affecting the measurement. Furthermore, the modulation frequency can be set at whatever value is required for the particular measurement, whilst the carrier frequency can be set at a value suitable for achieving good directivity. By the use of frequency modulation, other advantages, such as high signal-to-noise ratio and single-signal capture, are achieved.

United States Patent No. 4 167 879 discloses an apparatus for detecting flaws, in which the ultrasonic energy is modulated in accordance with a code.

Neither my previous apparatus as described above, nor the apparatus disclosed in US—A—4 167 879, makes provision for the selection of a particular region in a medium whereby only reflections occurring within that region are taken into account.

It is an object of the present invention to provide apparatus for detecting interfaces occurring in a medium by use of a frequency modulated ultrasonic beam, whereby data relating to interfaces occurring within a given depth or thickness of the medium can be obtained.

Hence, the presence of a change of tissue consistency in a given region, such as occurs when a cancerous growth is present, can be diagnosed without the danger and expense of complicated scanning systems using x-rays or nucleonic sources. Other types of inhomogeneity can also be detected, such as strata occurring within a given depth of a liquid, or the presence of a layer of foreign material within, or at the boundary of, a liquid.

According to the present invention, there is provided apparatus to detect the presence of a sound-reflective inhomogeneity in a selected region within a medium, including distance-measuring equipment comprising a transducer to transmit frequency-modulated ultrasonic energy through the medium; a transducer to receive reflected ultrasonic energy; and means to adjust the modulation frequency of the ultrasonic energy in dependence upon the measured distance to obtain a required relationship between the modulation phase of the transmitted ultrasonic energy and the modulation phase of the received energy; characterised in that the modulation frequency adjustment means includes means to select a frequency range having frequency limits outside which the modulation frequency cannot deviate, said frequency limits corresponding to the distance from the transducers of near and far boundaries of a selected region of the medium within which measurement is required; and means responsive to locking of the modulation frequency at a value in said range to indicate the presence of a reflective interface in the selected region.

Embodiments of the invention will now be described, by way of example, with reference to the accompanying drawings, in which:

Fig. 1 is a schematic circuit diagram of one form of apparatus according to the invention;

Fig. 2 is a schematic circuit diagram of another form of apparatus according to the invention;

Figure 3 shows schematically a cross-section through an oil tank incorporating apparatus according to the invention; and

Figure 4 illustrates the use of apparatus according to the invention for indicating the profiles of layers of different tissue or of bone within a limb.

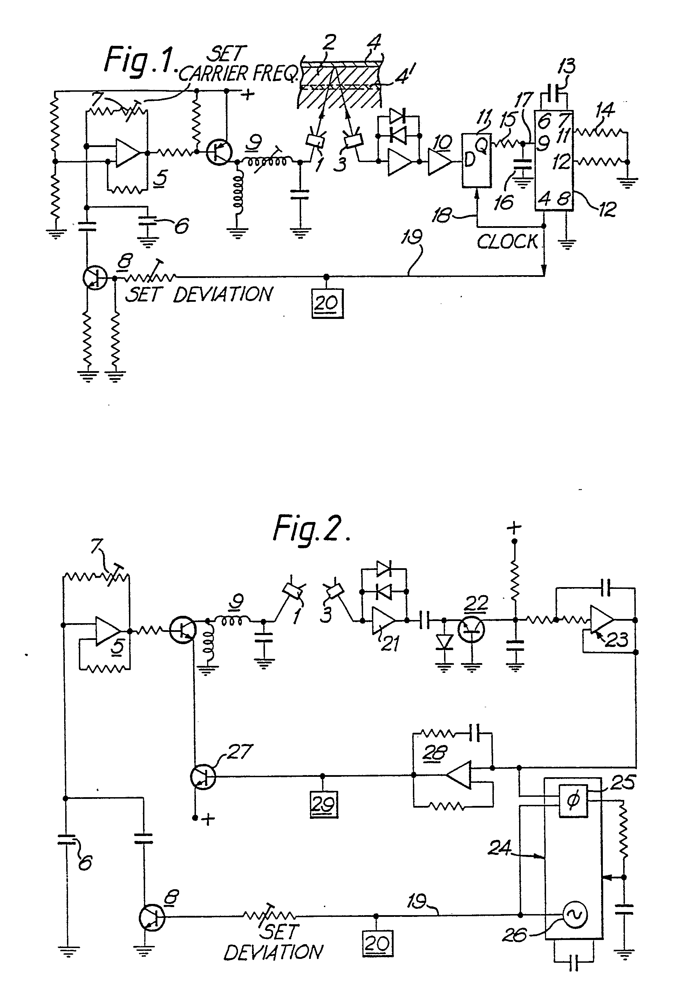

Referring to Fig. 1 of the drawing, apparatus to detect the presence of an inhomogeneity in a medium, for example a liquid 2, comprises an ultrasonic transducer 1 which is disposed in the medium to transmit ultrasonic energy in the medium, and a transducer 3 which is disposed to receive ultrasonic energy reflected from an inhomogeneity represented by an interface 4 with some other material. The transducer 1 is energised by an oscillator 5 which produces a carrier signal, the centre frequency of which is determined by a capacitor 6 and a variable resistor 7. The carrier signal is modulated by a frequency-modulation circuit 8, and the modulated carrier is fed to the transducer 1 via a power amplifier 9.

The receiving transducer 3 feeds the received frequency-modulated carrier signal to an amplifier-limiter and f.m. demodulator circuit 10. The demodulated output, i.e. the received modulation, is fed to D-type flip-flop 11 (e.g. type 4013) which is connected in a phase-locked loop with a P.L.L. integrated circuit 12. The circuit 12 may comprise any suitable chip (such as the 4046 chip) incorporating a voltage-controlled oscillator (VCO) and a phase comparator. A capacitor 13 and a resistor 14 are provided to determine the centre operating frequency of the VCO. The output of the flip-flop 11 is fed, via a filler comprising a resistor 15 and a capacitor 16, to a control voltage input 17 of the circuit 12.

The VCO output is fed via a line 18 to a "clock" input of the flip-flop 11, and is also fed via a line 19 to the frequency-modulation circuit 8 as the modulation frequency. A frequency-dependent display 20 is connected to the line 19.

In describing the operation of the circuit, it will firstly be assumed that the interface 4 occurs at a distance from the transducers 1 and 3 which is within predetermined operating limits for the phase-locked loop circuit 12. The beam from the transducer 1 is reflected at the interface 4, and at least part of the energy is received at the transducer 3. The modulation fed to the flip-flop 11, together with the clock pulses on the line 18, cause the flip-flop to set and reset continuously, and the phase comparator of the PLL 12 compares the phase of the flip-flop output with the phase of the clock pulses and adjust the modulation frequency accordingly if the correct phase relationship does not exist.

The relationship will be correct only if the path length travelled by the ultrasonic energy corresponds to an integral number of half-wave lengths of the modulation frequency. Hence, the modulation frequency gives a measure of the distance from the transducer 1 to the inhomogeneity 4. The display 20 therefore indicates that distance, either digitally or graphically.

If an inhomogeneity 4' now appears, energy from the beam will be reflected therefrom, and the phase-locked loop can adjust the modulation frequency to take into account the shorter distance travelled by the ultrasonic energy. The apparatus will, therefore, constantly monitor the existence of significant homogeneities, provided that the required modulation frequency falls within the working range of the phase-locked loop.

If the modulation frequency is forced to sweep over a wide range by sweeping the centre frequency of the phase-locked loop, each time the frequency corresponds to the position of an inhomogeneity the loop will try to lock. Hence, the positions of all inhomogeneities within a given distance can be monitored.

Alternatively, if the loop operating frequency range is made narrow, only those inhomogeneities occurring within a given stratum of the medium will be taken into account. Hence, considering the inhomogeneities 4 and 4' in Fig. 1, the operating frequency range may be set so that the inhomogeneity 4 (for example the surface of a liquid) is ignored, but a dense layer or foreign body 4' present beneath the surface is located. Conversely, a layer 4' may be ignored and the layer 4 located by suitably setting the operating frequency range.

Various types of phase-locked loop circuits are known, and a particular type will be selected depending upon the required mode of operation. The circuit 12 in Fig. 1 is of the pulse-counting edge-controlled memory phase comparator type, and can be made very sensitive due to working on the leading edges of the modulation signal.

For higher stability, an exclusive-OR type of phase comparator may be used, which type considers only whole cycles of the modulation. A circuit including such a comparator and also including automatic power control will now be described, with reference to Fig. 2 of the drawings, in which components having the same functions as in the Fig. 1 circuit have the same reference numerals as in that figure. In this case, the output of the transducer 3 is fed to limiter-amplifier 21, and the received frequency-modulated carrier is then demodulated by a pulse-counting demodulator 22. The resultant modulation is fed via a constant-phase low-pass filter 23, for example of the Butterworth type, to a phase-locked loop (P.L.L.) integrated circuit 24, which may be a type 4046 chip as in the Fig. 1 embodiment, but using an exclusive-OR P.L.L. configuration 25 provided therein instead of the type of comparator circuit used in Fig. 1. One input to the circuit 25 comprises the received modulation, and the other input is provided by a voltage-controlled oscillator (V.C.O.) 26. The V.C.O. output provides the modulating signal, as previously described, and is fed to the display 20 and to the frequency-modulation circuit 8.

The loop gain of the Figs. 1 and 2 circuits has no effect on the accuracy of the measurements over wide limits, but it can be controlled automatically to give a substantially constant received modulation signal, irrespective of changes in the attenuation of the path along which the ultrasonic energy is transmitted and received. This can be achieved, as shown in Fig. 2, by controlling the input power fed to the power amplifier 9 using a signal fed back from the amplifier 21 such as to ensure that the power is kept at a level for which the amplifier 21 just limits. The input power to the amplifier 9 is controlled by a transistor 27, and the feed back signal is derived by feeding the modulation output from the filter 23 through an integrator circuit 28 and thence to the base electrode of the transistor 27. The feedback signal provides a measure of the attenuation of the path via which the ultrasonic energy passes between the transducers 1 and 3, and this can be fed to an indicator or display 29. Changes in the displayed attenuation value could, for example, indicate the presence of bubbles or solid particles in a normally liquid medium.

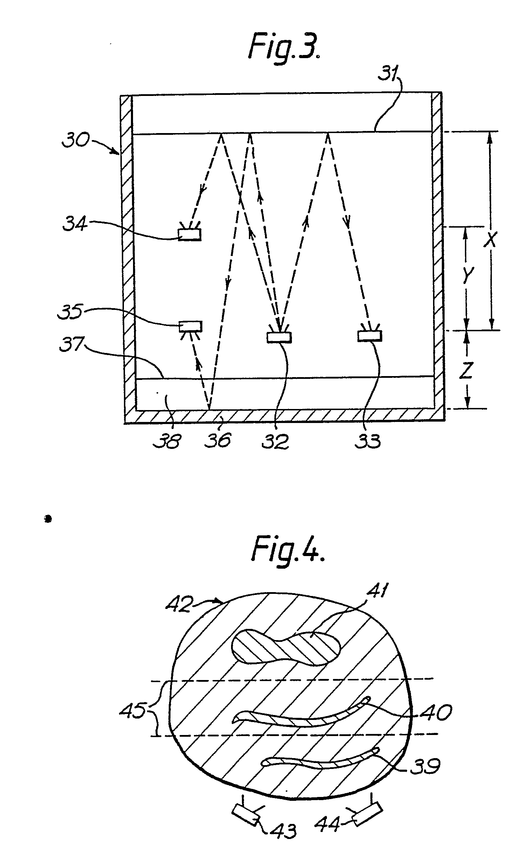

Referring now to Fig. 3 of the drawings, a tank 30 contains oil up to a level 31. A transmitting transducer 32 located in the oil is connected to a circuit (not shown) such as described above and transmits frequency-modulated ultrasonic energy upwards through the oil. Energy reflected from the surface 31 is received by an upward-pointing receiving transducer 33 and, via a different path, by a second upward-pointing receiving transducer 34 a vertical distance Y above the transmitting transducer 32. A third receiving transducer 35 points downwards to receive energy reflected firstly by the surface 31 and then by the base 36 of the tank, or, as will be explained later, by the surface 37 of a layer of water or sediment 38. The transducers 32, 33 and 35 are all located at a fixed distance Z above the base 36. The level 31 is at a variable distance X above the transducers 32, 33 and 35.

Whilst the transmitting transducer 32 is permanently connected to the modulation and P.L.L. circuitry, the receiving transducers 33, 34 and 35 may be switched into circuit sequentially by electronic switching means (not shown) which also causes any necessary change in the modulation centre frequency and the frequency range as each transducer is connected.

The frequency $(F_1)$ for the transmission from the transducer 32 to the transducer 33 could be used to determine 2X, and hence the height of the surface 31 above the base 36 could be obtained. However, by taking another frequency setting $(F_2)$ using the transducers 32 and 34, an indication of $2X - Y$ is obtained. Y is a known value, and the value of X can be obtained from

$$X = \frac{Y}{2} \cdot \frac{F_1}{F_1 - F_2}.$$

This will take into account changes in the density of oil which may occur near the surface 31, and/or the production of vapour.

If a modulation frequency $F_3$ is produced for ultrasonic energy received by the transducer 35, it can readily be checked whether this frequency truly corresponds to the distance $2X + 2Z$ i.e. that reflection of the energy has taken place at the surface 31 and at the base 36. For this frequency to be correct, $F_3 - F_1$ should represent 2Z. If it is found that $F_3$ is not correct, it follows that there must be some inhomogeneity elsewhere, such as at the surface 37 of a layer 38 of water or sediment at the bottom of the tank. The value $F_3 - F_1$ will give an indication of the location of the layer.

The weight of oil in the tank may be computed from the measured height of the level 31 and the temperature of the oil. If the speed of sound in the liquid at a given temperature is known, the average temperature of the liquid in the path followed by the ultrasonic energy can be computed from the resultant modulation frequency.

It will be seen that if the height of the oil level is known from use of some other measuring system, the ultrasonic apparatus can be used to give warning of the presence of an inhomogeneity beneath the surface. In this case, the operating frequency range is selected so that the apparatus will not take into account reflections from the surface.

In a tank containing liquid petroleum gas, such an inhomogeneity could be an unusually dense layer adjacent the surface, produced by local cooling following the drawing-off of some of the gas. Such a layer can be potentially highly dangerous, because it may suddenly sink to the bottom of the tank following a path round the periphery of the tank, accompanied by a general swirling of the contents of the tank. The forces produced may be large enough to overturn the tank, so it is extremely advantageous to be forewarned that a dense layer is beginning to form.

Referring now to Fig. 4 of the drawings, the apparatus can be used for investigating the profiles of various layers of tissue 39 and 40 and bone 41 within a limb 42. Transmitting and receiving transducers 43 and 44, respectively, are located adjacent the limb and are connected to a frequency modulation and P.L.L. circuit as described above.

By selection of the operating modulation frequency range, reflections from an interface in a particular stratum of the limb can be obtained and the location of the interface indicated in the manner described above. The transducers may be made to scan across the limb, so that the profile of the interface can be displayed on the unit 20.

For example, the stratum contained between dotted lines 45 in Fig. 4 may be investigated, and reflections will be obtained from the tissue 40. The profile of this tissue will be plotted as the transducers 43 and 44 scan the limb.

Due to the limited modulation frequency range, reflections from the tissue 39 will be ignored, as will those from the bone 41. If it is desired to investigate the tissue 39 or the bone 41, the frequency range must be adjusted accordingly.

The apparatus can be used for scanning articles such as metal castings. The presence of any inhomogeneity which will cause a change in the speed of sound in the article, and hence will cause reflection of the ultrasonic beam, can be detected. The position of impurities, cracks or blowholes can be determined from the resultant modulation frequency when the P.L.L. has locked.

The apparatus may be used with gases, liquids or solids and will show the interface when a change of phase occurs. When dealing with a solid or animate material is may be advantageous to reduce the interface losses between the transducers and the object under test by means of a coupling fluid, as is well known in non-destructive testing practice. Alternatively, the object and the transducers can be immersed in a fluid, for example water, so that the energy is concentrated at the area of interest.

## Claims

1. Apparatus to detect the presence of a sound-reflective inhomogeneity in a selected region within a medium, including distance-measuring equipment comprising a transducer (1, 32, 43) to transmit frequency-modulated ultrasonic energy through the medium (2); a transducer (3, 33, 34, 35, 44) to receive reflected ultrasonic energy; and means (12) to adjust the modulation frequency of the ultrasonic energy in dependence upon the measured distance to obtain a required relationship between the modulation phase of the transmitted ultrasonic energy and the modulation phase of the received energy; characterised in that the modulation frequency adjustment means (12) includes means to select a frequency range having frequency limits outside which the modulation frequency cannot deviate, said frequency limits corresponding to the distance from the transducers of near and far boundaries (45) of a selected region of the medium within which measurement is required; and means (20) responsive to locking of the modulation frequency at a value in said range to indicate the presence of a reflective interface in the selected region.

2. Apparatus as claimed in claim 1, characterised in that the means to adjust the modulation frequency comprises a phase-locked loop (12).

3. Apparatus as claimed in claim 1 or claim 2, adapted to detect the presence of an inhomogeneity beneath the surface of a liquid, characterised in that the transducers (1, 3; 32, 33, 34) are positioned within the liquid (2) and face towards the surface (4; 31).

4. Apparatus as claimed in claim 1 or claim 2, arranged to detect the presence of an inhomogeneity (37) at the bottom of a liquid in a container (30), characterised in that the transducers are positioned within the liquid; in that the transmitting transducer (32) faces towards the surface of the liquid; and in that the receiving transducer (35) faces the bottom of the container and is operative to receive the ultrasonic energy after successive reflections from the surface (31) and from the inhomogeneity.

5. Apparatus as claimed in claim 1 or claim 2, characterised by means (43, 44) to cause scanning of the frequency-modulated ultrasonic energy across the selected region (45) to detect the profile of an inhomogeneity (40) present in the selected region.

6. Apparatus as claimed in claim 5, characterised by display means (20), responsive to successive modulation frequency values determined as the ultrasonic energy is scanned across the selected region (45), to display the profile.

7. Apparatus as claimed in any preceding claim, characterised by a feedback loop (27, 28) to provide a signal for controlling the power level of the transmitted ultrasonic energy to maintain a substantially constant received ultrasonic energy level despite changes in attenuation due to the medium through which the ultrasonic energy passes between the transducers (1, 3); and means (29) responsive to the feedback loop signal to indicate the attenuation.

**Revendications**

1. Appareil permettant de détecter la présence d'une inhomogénéité réfléchissant le son dans une région sélectionnée à l'intérieur d'un milieu, comportant un équipement de mesure de distance qui comprend un transducteur (1, 32, 43) servant à émettre une énergie ultrasonore modulée en fréquences passant dans le milieu (2); un transducteur (3, 33, 34, 35, 44) servant à recevoir l'énergie ultrasonore réfléchie; et un moyen (12) servant à ajuster la fréquence de modulation de l'énergie ultrasonore en fonction de la distance mesurée pour obtenir une relation voulue entre la phase de modulation de l'énergie ultrasonore émise et la phase de modulation de l'énergie reçue; caractérisé en ce que le moyen (12) d'ajustement de la fréquence de modulation comporte un moyen permettant de sélectionner une gamme de fréquences présentant des fréquences limites hors desquelles la fréquence de modulation ne peut s'écarter, lesdites fréquences limites correspondant à la distance aux transducteurs des frontières (45) proche et éloignée d'une région sélectionnée du milieu à l'intérieur duquel le mesure est demandée; et un moyen (20) répondant au verrouillage de la fréquence de modulation sur une valeur contenue dans ledit intervalle en indiquant la présence d'une interface réfléchissante dans la région sélectionnée.

2. Appareil selon la revendication 1, caractérisé en ce que le moyen servant à ajuster la fréquence de modulation comprend une boucle de verrouillage de phase (12).

3. Appareil selon la revendication 1 ou 2, conçu pour détecter la présence d'une inhomogénéité au-dessous de la surface d'un liquide, caractérisé en ce que les transducteurs (1, 3; 32, 33, 34) sont placés à l'intérieur du liquide (2) et sont tournés vers la surface (4; 31).

4. Appareil selon la revendication 1 ou 2, conçu pour détecter la présence d'une inhomogénéité (37) au fond d'un liquide contenu dans un conteneur (30), caractérisé en ce que les transducteurs sont placés à l'intérieur du liquide; en ce que le transducteur émetteur (32) est tourné vers la surface du liquide; et en ce que le transducteur récepteur (35) est tourné vers le fond du conteneur et a pour fonction de recevoir l'énergie ultrasonore après ses réflexions successives par la surface (31) et par l'inhomogénéité.

5. Appareil selon la revendication 1 ou 2, caractérisé par un moyen (43, 44) servant à provoquer le balayage par l'énergie ultrasonore modulée en fréquence de la région sélectionnée (45) pour que soit détecté le profil d'une inhomogénéité (40) présente dans la région sélectionnée.

6. Appareil selon la revendication 5, caractérisé par un moyen d'affichage (20) qui répond à des valeurs successives de modulation de fréquence déterminées, lorsque l'énergie ultrasonore balaye la région sélectionnée (45), en affichant le profil.

7. Appareil selon l'une quelconque des revendications précédentes, caractérisé par une boucle de réaction (27, 28) servant à produire un signal de commande du niveau de puissance de l'énergie ultrasonore émise afin de maintenir un niveau sensiblement constant pour l'énergie ultrasonore reçue malgré les variations de l'atténuation dues au milieu par lequel passe l'énergie ultrasonore en allant d'un transducteur (1) à l'autre (3); et par un moyen (29) répondant au signal de la boucle de réaction en indiquant l'atténuation.

**Patentansprüche**

1. Vorrichtung zum Feststellen der Vorhandenseins einer Schall reflektierenden Inhomogenität in einem ausgewählten Bereich innerhalb eines Mediums, mit einer Abstandsmeßeinrichtung, die einen Umformer (1, 32, 43) zum Senden frequenzmodulierter Ultraschallenergie durch das Medium (2) hindurch, einen Umformer (3, 33, 34, 35, 44) zum Empfangen reflektierter Ultraschallenergie und ein Mittel (12) zum Einstellen der Modulationsfrequenz der Ultraschallenergie in Abhängigkeit von dem gemessenen Abstand zur Bildung einer erforderlichen Beziehung zwischen der Modulationsphase der ausgesendeten Ultraschallenergie und der Modulationsphase der empfangenen Energie aufweist, dadurch gekennzeichnet, daß das Modulationsfrequenz-Einstellmittel (12) ein Mittel zum Auswählen eines Frequenzbereiches mit Frequenzgrenzen, außerhalb denen die Modulationsfrequenz nicht abweichen kann, wobei die Frequenzgrenzen dem Abstand der Umformer von nahen und fernen Grenzen (45) eines ausgewählten Bereiches des Mediums entsprechen, in dem die Messung erforderlich ist, und ein Mittel (20) aufweist, das in Abhängigkeit von der Konstanthaltung der Modulationsfrequenz auf einem in dem erwähnten Frequenzbereich liegenden Wert die Anwesenheit einer reflektierenden Grenzfläche in dem ausgewählten Bereich des Mediums anzeigt.

2. Vorrichtung nach Anspruch 1, dadurch gekennzeichnet, daß das Mittel zum Einstellen der Modulationsfrequenz einen phasenstarren Frequenzregelkreis (12) aufweist.

3. Vorrichtung nach Anspruch 1 oder 2 zum Feststellen der Anwesenheit einer Inhomogenität unterhalb der Oberfläche einer Flüssigkeit, dadurch gekennzeichnet, daß die Umformer (1, 3; 32, 33, 34) innerhalb der Flüssigkeit (22) angeordnet und der Oberfläche (4; 31) zugekehrt sind.

4. Vorrichtung nach Anspruch 1 oder 2 zum Feststellen einer Inhomogenität (37) am Boden einer Flüssigkeit in einem Behälter (30), dadurch gekennzeichnet, daß die Umformer innerhalb der Flüssigkeit angeordnet sind, daß der sendende Umformer (32) der Oberfläche der Flüssigkeit zugekehrt ist und daß der empfangende Umformer (35) dem Boden des Behälters zugekehrt und derart betreibbar ist, daß er die Ultraschallenergie nach mehrmaliger Reflektion von der Oberfläche (31) und von der Inhomogenität empfängt.

5. Vorrichtung nach Anspruch 1 oder 2, gekennzeichnet durch Mittel (43, 44) zum Abrastern des ausgewählten Bereiches (45) des Mediums mittels der frequenzmodulierten Ultraschallenergie, um das Profil einer in dem ausgewählten Bereich des Mediums vorhandenen Inhomogenität (40) festzustellen.

6. Vorrichtung nach Anspruch 5, gekennzeichnet durch ein Sichtgerät (20) das in Abhängigkeit von aufeinanderfolgenden Modulationsfrequenzwerten, die bei der Abrasterung des ausgewählten Bereiches (45) des Mediums durch die Ultraschallenergie ermittelt werden, das Profil anzeigt.

7. Vorrichtung nach einem der vorstehenden Ansprüche, gekennzeichnet durch eine Rückkopplungsschleife (27, 28) zur Bildung eines Signals zur Steuerung des Leistungspegels der ausgesendeten Ultraschallenergie derart, daß der empfangene Ultraschallenergiepegel unabhängig von Änderungen der durch das Medium bewirkten Dämpfung, durch das die Ultraschallenergie zwischen den Umformern (1, 3) übertragen wird, weitgehend konstant bleibt, und einem Mittel (29), das in Abhängigkeit von dem Rückkopplungsschleifensignal die Dämpfung anzeigt.

0 049 311

Fig.1.

SET CARRIER FREQ.

CLOCK

SET DEVIATION

Fig.2.

SET DEVIATION

1

## Fig.3.

## Fig.4.